# FASCICULE DE BREVET EUROPEEN

(11) **EP 0 706 250 B1**
(45) Date de publication et mention de la délivrance du brevet: **09.12.1998**
(21) Numéro de dépôt: 95410096.2
(22) Date de dépôt: 05.09.1995
(51) Int. Cl.: H02G 3/12

(54) **Boîtier d'encastrement pour appareillage électrique**
Einbaudose für elektrisches Gerät
Flush mounted box for electrical apparatus

(30) Priorité: 04.10.1994 FR 9412037
(43) Date de publication de la demande: 10.04.1996
(73) Titulaire: SCHNEIDER ELECTRIC SA, 92100 Boulogne Billancourt (FR)
(72) Inventeur: Meyer, Jean-Claude, Schneider Electric, F-38050 Grenoble Cedex 09 (FR); Zinsius, Laurent, Schneider Electric, F-38050 Grenoble Cedex 09 (FR)
(74) Mandataire: Hecké, Gérard

(56) Documents cités:
- DE-U- 9 311 023
- FR-A- 2 616 016

## Description

La présente invention concerne un boîtier pour un appareillage électrique à encastrer dans un support, notamment dans une paroi mince ou creuse, ce boîtier comprenant un corps, des moyens de retenue de ce corps et des moyens de serrage des moyens de retenue pour assurer un montage ferme du boîtier dans ledit support, lesdits moyens de retenue comprenant au moins deux cavaliers protubérants montés sur la paroi latérale du boîtier, et mobiles le long de cette paroi, et lesdits moyens de serrage comprenant au moins deux vis solidaires de la paroi latérale et coopérant respectivement avec lesdits cavaliers pour engendrer leur déplacement, lesdits cavaliers étant réalisés d'une pièce par un moulage par injection avec le corps du boîtier, en étant liés au corps du boîtier par au moins une bride pouvant être sectionnée, et constituant une zone de moindre résistance permettant le détachement de ces cavaliers du corps du boîtier, ledit corps comportant des niches dans lesquelles sont initialement logés les cavaliers.

On connaît des boîtiers de ce type comportant deux ou plusieurs vis portant respectivement un cavalier de retenue réalisé en matière synthétique ou en métal et pourvus d'une ouverture filetée dans laquelle est engagée la vis. Une rotation dans un sens de la vis entraîne le déplacement dans un sens du cavalier. Par exemple, une rotation dans le sens des aiguilles d'une montre provoque un déplacement du cavalier vers le haut ou l'avant du boîtier et une rotation en sens inverse déplace le cavalier vers le fond du boîtier. Dans ces systèmes connus, les cavaliers sont des éléments rapportés ce qui nécessite un assemblage et peut être à l'origine de pertes. Le document FR-A- 2616016 propose de réaliser les cavaliers par moulage avec le corps du boîtier en plastique, mais il est nécessaire de détacher les cavaliers de la paroi de la boîte au moyen d'un tournevis.

La présente invention se propose de pallier ces inconvénients en réalisant un boîtier du type mentionné ci-dessus conçu pour supprimer à la fois les opérations d'assemblage et les risques de perte des cavaliers, tout en diminuant son coût de revient par une simplification de sa fabrication.

Le boîtier selon l'invention est caractérisé en ce que chaque niche est délimitée vers le haut par une rampe qui provoque le pivotement du cavalier au début de sa remontée occasionnée par le vissage de la vis correspondante, en même temps que s'effectue l'arrachage de la bride pour désolidariser le cavalier du corps du boîtier, ladite rampe déplaçant ensuite le cavalier d'une position rétractée vers une position déployée latéralement.

D'autres avantages et particularités de la présente invention ressortiront mieux de la description d'une forme de réalisation de l'art antérieur et de l'invention, donnée à titre d'exemple non limitatif, et des dessins annexés, dans lesquels :
- la figure 1 représente une vue en perspective d'un boîtier selon l'art antérieur,
- la figure 2 représente une vue en élévation du boîtier de la figure 1 en début de montage dans son support,
- la figure 3 représente une vue en élévation du boîtier des figures précédentes en fin de montage dans son support,
- la figure 4 représente une vue de dessous du boîtier selon l'invention,
- la figure 5 représente une vue partielle en coupe axiale du boîtier de la figure 4,
- la figure 6 représente une vue partielle en coupe axiale du boîtier de l'invention en début de montage sur son support, et
- la figure 7 représente une vue similaire à celle de la figure 6, en fin de montage du boîtier sur son support.

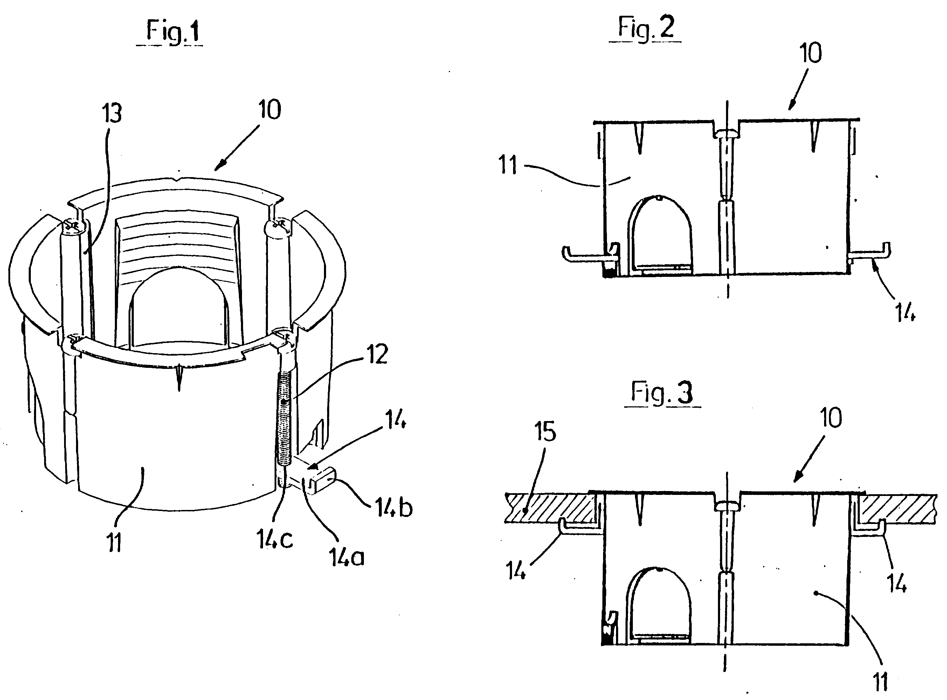

En référence aux figures 1 à 3, le boîtier 10 représenté qui correspond à l'art antérieur connu comporte un corps de boîtier 11, de préférence réalisé par moulage en matière synthétique thermoplastique, deux vis 12 logées dans des alvéoles 13 appropriés du boîtier et deux cavaliers 14 qui sont montés sur les vis 12. Ces cavaliers sont des pièces rapportées qui peuvent être faites en matière synthétique ou en métal. Ces cavaliers comportent une plaquette 14a coudée à une extrémité pour former un rebord 14b et pourvue d'une ouverture 14c filetée intérieurement, dans laquelle est engagée l'extrémité de la vis 12 correspondante.

Les cavaliers 14 servent à maintenir le boîtier dans un logement approprié ménagé dans un support. Ce logement a une forme circulaire dont le diamètre correspond au diamètre du corps du boîtier. Le support 15 représenté sur la figure 3, est constitué par un panneau, ou un mur de briques creuses ou tout autre matériau similaire.

Comme le montre la figure 2, les cavaliers sont disposés à proximité du fond du boîtier au moment de la mise en place ou pendant le stockage. Le maintien en place du boîtier encastré dans son support s'effectue par serrage du cavalier 14 contre la face arrière du support 15, comme le montre la figure 3.

Le nombre de cavaliers peut bien entendu être égal à deux, à trois, à quatre selon les dimensions du boîtier ou la qualité du support.

L'inconvénient de ces boîtiers connus est que les cavaliers sont constitués de pièces rapportées. De ce fait, leur fabrication est faite séparément du boîtier, ce qui nécessite un outillage spécial et leur assemblage constitue une opération ultérieure qui renchérit le coût du boîtier.

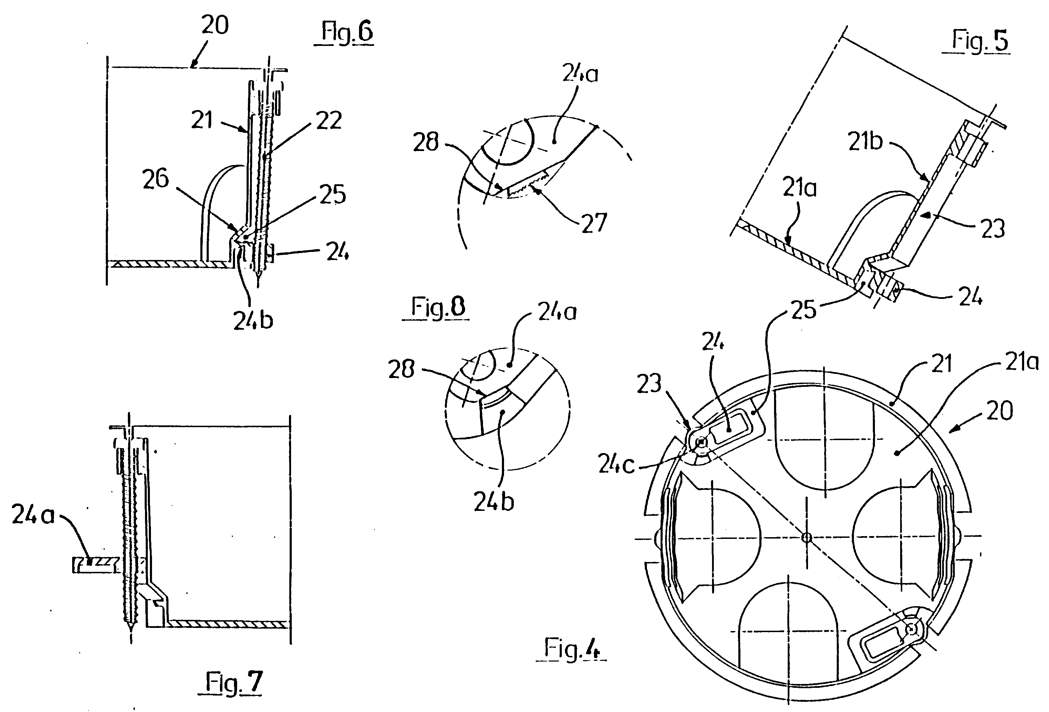

Le boîtier 20 selon l'invention, tel que représenté par les figures 4 à 7 comprend un corps 21, sensiblement cylindrique, pourvu d'un fond 21a et de parois latérales 21b. Il est équipé de deux vis 22 diamétralement opposées et logées dans des alvéoles 23 ménagés dans la paroi latérale du boîtier. A chaque vis est associé un cavalier 24 qui présente la particularité d'être moulée d'une pièce avec le corps du boîtier. Ces cavaliers comportent une partie 24a en forme de plaquette et sont à l'origine liées à la partie inférieure du corps du boîtier par une bride 24b constituant une zone de moindre résistance qui est cassante. Cette liaison est conçue pour s'arracher lorsque l'utilisateur tourne la vis correspondante pour faire remonter le cavalier vers l'ouverture du boîtier. A cet effet, la partie 24a en forme de plaquette comporte une ouverture filetée 24c pour le passage de la vis correspondante.

En variante la partie (24a) pourrait tout aussi bien comporter une ouverture cylindrique lisse dans laquelle viendrait se visser la vis (22); le filet dans l'ouverture étant dans ce cas formé par la vis du type autotaraudeuse.

Sur les figures 4 et 5, les cavaliers sont rétractés par rapport à la paroi latérale du corps du boîtier et sont logés dans des niches 25 dans une position d'attente. C'est dans cet état que l'utilisateur introduit le boîtier dans un logement approprié ménagé dans le support (non représenté).

Par la suite, l'opérateur tourne les vis dans un sens tel que les cavaliers aient tendance à "monter" le long de la paroi latérale. La position initiale est représentée par la figure 6. Une position intermédiaire est illustrée par la figure 7. On voit notamment sur les figures 5 et 6 que la niche 25 est délimitée vers le haut par une rampe 26 qui provoque le pivotement du cavalier au début de sa remontée occasionnée par la vis correspondante, en même temps que s'effectue l'arrachage de la bride 24b qui a pour effet de désolidariser le cavalier du corps du boîtier. Cette rampe déplace le cavalier de sa position rétractée dans une position déployée dans laquelle il peut assurer le blocage en position du boîtier dans son support.

L'avantage de cette réalisation réside dans le fait que la fabrication du corps du boîtier et des cavaliers s'effectue au cours d'une même opération d'injection dans un moule unique.

En référence aux figures 7 et 8, chaque cavalier 24 est pourvu d'un méplat 28 au droit de la bride 24b, ledit méplat 28 permettant lors du sectionnement de la bride 24b à la partie résiduelle 27 de s'intégrer dans le volume du cavalier 24, pour autoriser une remontée sans accroc des cavaliers 24 le long des alvéoles 23.

Il est clair que le boîtier 11 peut avoir une forme différente, notamment carrée ou rectangulaire. Le nombre de vis 22 peut être supérieur à deux en fonction de la dimension du boîtier.

## Revendications

1. Boîtier pour un appareillage électrique à encastrer dans un support, notamment dans une paroi mince ou creuse, ledit boîtier (20) comprenant un corps (21), des moyens de retenue de ce corps et des moyens de serrage des moyens de retenue pour assurer un montage ferme du boîtier dans ledit support, lesdits moyens de retenue comprenant au moins deux cavaliers (24) protubérants montés sur la paroi latérale du boîtier, et mobiles le long de cette paroi, et lesdits moyens de serrage comprenant au moins deux vis (22) solidaires de la paroi latérale et coopérant respectivement avec lesdits cavaliers pour engendrer leur déplacement, lesdits cavaliers (24) étant réalisés d'une pièce par un moulage par injection avec le corps du boîtier (21), en étant liés au corps (21) du boîtier (20) par au moins une bride (24b) pouvant être sectionnée, et constituant une zone de moindre résistance permettant le détachement de ces cavaliers du corps du boîtier, ledit corps (21) comportant des niches (25) dans lesquelles sont initialement logés les cavaliers,
caractérisé en ce que
chaque niche est délimitée vers le haut par une rampe (26) qui provoque le pivotement du cavalier (24) au début de sa remontée occasionnée par le vissage de la vis (22) correspondante, en même temps que s'effectue l'arrachage de la bride (24b) pour désolidariser le cavalier du corps du boîtier, ladite rampe déplaçant ensuite le cavalier (24) d'une position rétractée vers une position déployée latéralement.

2. Boîtier selon la revendication 1, caractérisé en ce que les cavaliers (24) comportent une partie (24a) en forme de plaquette et ladite bride (24b) qui rattache la plaquette au corps du boîtier.

3. Boîtier selon la revendication 2, caractérisé en ce que ladite partie (24a) comporte une ouverture (24c) filetée pour le passage de la vis correspondante.

4. Boîtier selon la revendication 2, caractérisé en ce que chaque cavalier (24) est pourvu d'un méplat (28) au droit de la bride (24b), ledit méplat (28) permettant lors du sectionnement de la bride (24b) à la partie résiduelle (27) de s'intégrer dans le volume du cavalier (24), pour autoriser une remontée sans accroc des cavaliers (24) le long des alvéoles (23).

## Patentansprüche

1. Dose für ein elektrisches Schaltgerät zum Einbau in einen Träger, insbesondere eine dünne Wand oder Hohlwand, welche Dose (20) ein Gehäuse (21), Rückhaltemittel dieses Gehäuses sowie Spannmittel der Rückhaltemittel zur Gewährleistung einer festsitzenden Montage der Dose im genannten Träger umfaßt, wobei die genannten Rückhaltemittel mindestens zwei, an der Seitenwand der Dose angebrachte und längs dieser Seitenwand verschiebbare, herausstehende Klemmbügel (24) umfassen, die genannten Spannmittel mindestens zwei, mit der Seitenwand verbundene Schrauben (22) umfassen, die jeweils mit den genannten Klemmbügeln zu deren Verschiebung zusammenwirken, die genannten Klemmbügel (24) durch Spritzgießen einstückig mit dem Gehäuse (21) der Dose ausgeführt und dabei mit dem Gehäuse (21) der Dose (20) über mindestens einen abtrennbaren Steg (24b) verbunden sind, der einen Bereich verminderter Festigkeit bildet, welcher ein Abtrennen dieser Klemmbügel vom Gehäuse der Dose ermöglicht, und das genannte Gehäuse (21) Ausnehmungen (25) aufweist, in denen die Klemmbügel anfänglich angeordnet sind,
dadurch gekennzeichnet, daß
jede Ausnehmung nach oben durch eine Schräge (26) begrenzt ist, die ein Ausschwenken des Klemmbügels (24) zu Beginn seiner durch das Eindrehen der zugehörigen Schraube (22) bewirkte Aufwärtsbewegung zur Folge hat, wobei gleichzeitig die Trennung des Stegs (24b) zum Ablösen des Klemmbügels vom Gehäuse der Dose erfolgt und die genannte Schräge den Klemmbügel (24) anschließend von einer zurückgezogenen in eine seitlich herausstehende Stellung überführt.

2. Dose nach Anspruch 1, dadurch gekennzeichnet, daß die Klemmbügel (24) einen als Plättchen ausgebildeten Abschnitt (24a) sowie den genannten Steg (24b) umfassen, über den das Plättchen mit dem Gehäuse der Dose verbunden ist.

3. Dose nach Anspruch 2, dadurch gekennzeichnet, daß der genannte Abschnitt (24a) eine Gewindebohrung (24c) zur Aufnahme der zugehörigen Schraube aufweist.

4. Dose nach Anspruch 2, dadurch gekennzeichnet, daß jeder Klemmbügel (24) eine rechtwinklig zum Steg (24b) ausgebildete Abflachung (28) aufweist, durch die beim Abtrennen des Stegs (24b) der Restgrat (27) innerhalb der Kontur des Klemmbügels (24) verbleiben kann, um so eine ruckfreie Aufwärtsbewegung der Klemmbügel (24) entlang der Aussparungen (23) zu ermöglichen.

## Claims

1. A case for electrical swfichgear to be flush-mounted in a support, in particular in a thin or hollow wall, said case (20) comprising a body (21), securing means for securing this body and means for clamping the securing means to achieve firm fitting of the case in said support, said securing means comprising at least two protuberant riders (24) fitted on the side wall of the case and movable along this wall, and said clamping means comprising at least two screws (22) securedly affixed to the side wall and cooperating respectively with said riders to bring about movement thereof, said riders (24) being manufactured in a single part by injection moulding with the body (21) of the case (20) and being joined to the body (21) of the case (20) by at least one flange (24b) able to be severed and constituting a zone of lesser resistance enabling these riders to be detached from the body of the case, said body (21) comprising niches (25) in which the riders are initially housed,
characterized in that
each niche is confined in the upwards direction by a ramp (26) which causes pivoting of the rider (24) at the beginning of its upward movement caused by tightening of the corresponding screw (22), at the same time as tearing-off of the flange (24b) takes place to sever the rider from the body of the case, said ramp then moving the rider (24) from a withdrawn position to a laterally deployed position.

2. The case according to claim 1, characterized in that the riders (24) comprise a part (24a) in the form of a small plate and said flange (24b) which joins the plate to the body of the case.

3. The case according to claim 2, characterized in that said part (24a) comprises a threaded opening (24c) for passage of the corresponding screw.

4. The case according to claim 2, characterized in that each rider (24) is provided with a flat (28) facing the flange (24b), said flat (28) enabling the residual part (27) to be integrated in the volume of the rider (24) when the flange (24b) is severed, to allow the riders (24) to move up along the recesses (23) without catching.
